# EUROPEAN PATENT SPECIFICATION

(11) **EP 4 159 642 B1**
(45) Date of publication and mention of the grant of the patent: **28.01.2026**
(21) Application number: 21199655.8
(22) Date of filing: 29.09.2021
(51) Int. Cl.: B65D 88/14, B65D 88/74

(54) **HIGH PERFORMANCE AERONAUTIC CONTAINER**
AERONAUTISCHER HOCHLEISTUNGSBEHÄLTER
CONTENEUR AÉRONAUTIQUE HAUTE PERFORMANCE

(43) Date of publication of application: 05.04.2023
(73) Proprietor: Swiss Airtainer SA, 1530 Payerne (CH)
(72) Inventor: Martin, Marco, 1400 Yverdon-les-Bains (CH); Seligman, Eduard, 1233 Bernex (CH)
(74) Representative: P&TS SA (AG, Ltd.)

(56) References cited:
- EP-A1- 2 903 900
- EP-A1- 3 355 008
- EP-B1- 2 903 900
- WO-A2-2004/045987
- WO-A2-2012/088299
- CN-A- 110 021 728
- CN-A- 110 931 685
- CN-U- 210 972 365
- US-A- 5 979 684
- US-A1- 2007 175 236
- US-A1- 2010 294 782

## Description

### Technical domain

The present invention concerns a container for shipping sensitive and/or high added-value products by air. It relates in particular to thermally regulated aeronautic containers having high energetic performances and allowing cost effective shipment of sensitive products, such as pharmaceutical products.

### Related art

The shipment of sensitive products requires that the temperature is maintained at or under a certain level, or within a certain range of temperatures along the time of travel. Passive means are usually used to limit the internal temperature variation of the container over time. Such passive means include for example Phase Changing Material (PCM) or thermal isolating materials, such a polyurethan or equivalent material, which is combined to the walls of the container. The thickness of the isolating material limits the remaining volume of the container that can be actually used for storing freight. It results in addition of an increase of the weight of the container, which also limits the amount of product that can be shipped.

Passive means need to be combined to an active thermal regulation system for the shipment of the most sensitive products. Such active system is part of the container, it participates to its extra weight and occupies space. In addition, it should be able to work autonomously, which necessitates the presence of a source of energy such as batteries.

It is a recurrent problematic to improve the rentability of the shipment, while controlling the internal temperature of the container all over the transportation time. The rentability of the shipment may be directly related to the maximum possible loading mass, the internal loading volume, the autonomy, the container Tara weight, or a combination of several of these parameters. The performances of the material used for maintaining a controlled temperature inside the container is most often related to its weight, cost and/or hindrance. For example, an efficient passive thermal isolation is most likely heavier than a less efficient one or may occupy more space. Although a good passive thermal isolation may allow to reduce the dimensions of the active system, including its weight, or its cost, or its consumption, the global benefit often appears mitigated due to the extra-weight or hindrance of the passive arrangement. On the contrary, a light and thin thermal isolation may require a more powerful, and thus a larger Temperature Control System to compensate the variations of the temperature inside the container. This results on either an increase of consumption and/or weight due to the necessary batteries, and/or a limitation in autonomy. The batteries associated to the Temperature Control System should be adapted to its energy consumption, considering also the degree of autonomy it should have. The most powerful Temperature Control System needs large and heavy batteries, which is prejudicial to the Tara weight of the container and/or its loading volume. It is in addition highlighted that the higher the energy consumption is, the worse the CO₂ footprint is. It is also highlighted that a heavy Tara weight negatively impacts the CO₂ footprint during the air transportation.

It is thus a challenging task to decrease the weight and/or hindrance of the Temperature Control System, including the batteries, which relates to an active means, while maintaining, or even decreasing, the weight and/or hindrance of the passive thermal means of isolation. It is also globally a challenging task to decrease the overall weight and/or hindrance of the container, including the isolation and the batteries, while maintaining the internal loading volume and the degree of autonomy.

Regarding the shipment of sensitive products, it is in addition most often necessary to provide a strong reliability so as to avoid any defects. For example, redundancy or over-dimensions of the key elements may be necessary.

In the field of the aircraft transportation, the regulation determines most of the parameters of the containers. In particular, their shape, dimension, mechanical resistances, fire resistance, fluid leakage and several other performances should comply with strict norms and regulations. One of the major restriction coming from the regulation concerns the position of the container center of gravity (CoG) that must be located close to the base center. This is often an issue when the batteries are located in the Equipment Bay and need to be balanced by a dead-weight on the opposite side of the container. This lead to a significant increase of the container overall weight. It results that decreasing the weight of an aircraft container while complying to all the regulations increases the difficulty compared to other technical fields. It should also be considered that sensitive products such as the pharmaceutical products also needs to comply to strict regulations, at least concerning the storage and shipping conditions.

Beside the thermal performances of an aircraft container, its flexibility of use is also an important parameter. The constraints related to the logistic chain may be very high, regarding at least the time of travel, the geographical areas, the storage conditions at airports, the amount of freight that needs to be shipped, etc. The modulation of the aircraft container on demand thus appears an advantage compared to traditional standard containers. In addition, the limited performances of some containers requires that specific infrastructures are built at the airports, to maintain the proper storage conditions.

Document WO2012047183 discloses Tracking Environmental Deviation System Box (TEDSBOX) having a temperature control system, batteries and passive means of temperature regulation such as an isolation. The internal space is organized so as to optimize the internal storage space. The power supply is integrated to the base of the cargo box to optimize the position of the Center of Gravity. The balance issue appears in service when the batteries are placed in the Equipment Bay. The dead weight necessary on the opposite to compensate them. Also, the power and dimensions of the Temperature Control system is not really object of the optimization. It results that the weight of the batteries remains an important issue.

US 2007/175236 A1 discloses a portable refrigeration container including a base, a dismantlable wall assembly mountable on the base to form a container volume, and a lid assembly configured to cover the top of the container volume to provide an enclosed space. The container further includes a cooling means capable of maintaining the enclosed volume in a cooled state.

US 5,979,684 A discloses a cargo container for temperature-controlled products, comprising at least two panels, at least one of which maintains rigidity, made from fibre-reinforced plastics.

WO 2004/045987 A2 discloses an air cargo container used as a transport container on airplanes, comprising an air-conditioning device, a control system, an insulating housing designed as an expanded single shell, and an air-conditioned inner chamber.

EP 3 355 008 A1 discloses a dolly for carrying temperature-sensitive cargo, equipped with an electric temperature control system configured to be electrically connected to a power source received in an electrical power source receiving portion of the chassis.

CN 210 972 365 U discloses a container with a hollow ventilation device, comprising a storage battery group electrically connected to a fan body, and a drawer box vertically fixed with a dehumidification cylinder, wherein the inner bottom plate of the box body is embedded with a heat-conducting sheet.

There is thus room to improve the performances of the craft containers, from the weight point of view, or for other aspects such as the flexibility, the autonomy, the shipment cost and sustainability, production and maintenance cost and energy consumption.

### Short disclosure of the invention

A temperature regulated container is provided as defined in claim 1. Optional embodiments are defined by the dependent claims.

An aim of the present invention is the provision of an aircraft container, that overcomes the shortcomings and limitations of the state of the art. It is in particular the aim of the present invention to provide a temperature regulated container for aircrafts, being lighter and more reliable than the known containers. It results that the CO₂ emission and the energy consumption has less impact on the environment. This also provides the possibility of more cost effective shipments of temperature sensitive products, without loss of quality. It is thus the objective of the present invention to provide an aircraft container, the weight of which is reduced by 10%, 20%, 30%, 40% or more compared to the known containers. It is the objective to provide an aircraft container having a weight of around 500 kg, or 400 kg or less, while corresponding to all the aircraft regulations applicable to such containers, where the traditional containers have a weight of around 650 kg or more.

It is an object of the present invention to provide an aircraft container having improved passive thermal performances. It is in particular aimed at providing a container the walls of which have a thermal conductivity of around 0,03 W/mK or around 0,02 W/mK or less, while corresponding to all the aircraft regulations applicable to such containers. It is a further aim to provide a container having an overall thermal conductance of less than around 4 W/K, or 3.5 W/K, or less.

Another aim of the present invention is to provide a temperature regulated container for aircrafts, having a better flexibility of use. The container is better adapted to the logistic constraints. It can also be used under severe or demanding conditions, without specific surrounding infrastructures or with limited specific surrounding infrastructures. To this extend, it is aimed at providing a container having larger autonomy and/or being adapted for longer storage conditions, even in absence of dedicated infrastructures.

Another aim of the invention is the provision of a process for making an aircraft container, having weight and/or thermal performances mentioned above.

According to the invention, these aims are attained by the object of the independent claims, and further described by the subject-matter of the dependant claims.

With respect to what is known in the art, the present aircraft container allows a more efficient and flexible container for shipment of sensitive and/or high added value products, such as pharmaceutical products.

### Short description of the drawings

Exemplar embodiments of the invention are disclosed in the description and illustrated by the following drawings:
- Figure 1 : Perspective view of a container according to an example of the present invention
- Figure 2a : Schematic transversal view of a container according to an example of the present invention
- Figure 2b: Schematic view of an insulating wall of a container according to the present invention
- Figure 3a: Exploded schematic view of a container according to an embodiment of the present invention
- Figure 3b: Exploded schematic view of a container according to another embodiment of the present invention
- Figure 4 : Schematic perspective view of a tray for batteries according to an example of the present invention
- Figure 5: Schematic exploded view of a tray for batteries according to an example of the present invention

### Examples of embodiments of the present invention

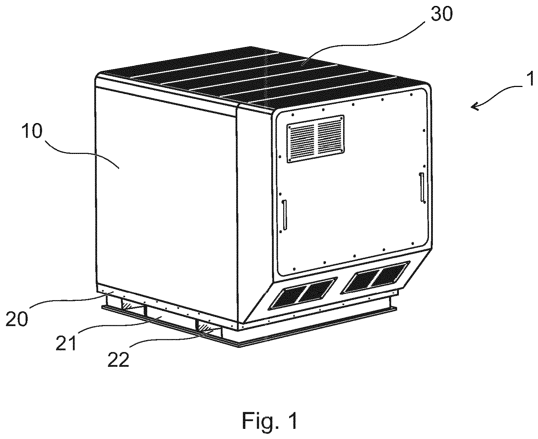

With reference to figures 1, 2, 3a and 3b, the container **1** of the present disclosure comprises a storage box **10,** also known as a thermally insulated chamber. The storage box is defined by walls **11** defining an internal storage volume **12,** corresponding to the payload compartment, dedicated to the freight. The walls are thermally insulated. The walls **11** comprise lateral walls and a top wall defining a roof. The container 1 may also comprise technical volume **13,** comprising at least some of the technical devices used for actively controlling the temperature inside the container **1.** As an example, the technical volume 13 may comprise one or more of a Temperature Control System (TCS) **14** and an Electrical Power System (EPS) **15,** adapted to manage the energy from various sources, such as battery or solar panels. The technical volume **13** may comprise all or part of the Temperature Control System (TCS) **14.** This includes for example the necessary compressor, evaporator, condenser and the corresponding pipes and fans. The technical volume **13** may also be used to lodge one or several extra batteries. For example, up to 3 extra batteries can be lodged in this technical volume. The technical volume is separated from the storage volume 12 by an internal wall, which can be also be thermally insulated. Such internal wall may be provided with any openings, air ducts, filters, sensors, necessary to allow the Temperature Control System (TCS) **14** to actively regulate the thermal conditions of the storage volume **12.**

The container **1** has a base **20** on which is arranged the storage box **10,** comprising forklift tunnels **22** and a central housing **21,** placed between the two forklift tunnels **22.** The central housing **21** is a hollow space adapted to receive the batteries **210** or any equivalent storage means of electrical power. Although the base **20** may have additional hollow space outside the forklift tunnels **22,** meaning on lateral positions of the base **20** these lateral hollow spaces are preferably kept empty to maintain the weight of the container under a certain limit.

According to an embodiment, the top surface of the base **20** is flat and the bottom surface of the storage box **10** is also flat, so that the lateral empty spaces of the base 20 cannot receive freight.

Thus, all the batteries **210** of the container **1** are housed in the reduced spaced between the two forklift tunnels **22.** Such a disposition necessitates to limit the hindrance of the batteries **210** so that all the batteries are lodged in the central housing **21.** In addition, due to a less hindrance of the batteries, a more loading weight may be available. The height of the batteries **210** is also limited. The storage volume **12** is thus improved. It is here understood that the reduced size of the batteries **210** is possible due to the high thermal performances of the walls **11** of the container **1.**

The TCS **14** and the power delivered by the batteries **210** are correlated. In particular, the TCS **14,** and more precisely, its compressor (not shown) is a low weight and low consumption compressor. The compressor may advantageously be a micro-rotative compressor. Its weight is preferably below 1kg, or around 800 g or below. The TCS **14** may comprise two or more compressors for a better redundancy and a better reliability, without negative impact on the amount of freight. Alternatively or in addition, more than **1** TCS may be included for a more complete redundancy. In other words, the weight gain due to the compact and light thermal active system can be exploits for a better reliability. The TCS **14** may alternatively or in addition comprise two independent electronic control and command arrangements. Other redundancy can be applied, such as communication arrangements, without prejudice of the amount of freight. It is here highlighted that such reduced size of the TCS depends on the thermal performances of the walls 11.

The TCS 14, and its compressor, or its set of compressors, allow a very precise temperature control inside the container 1. The rotation speed of such a compressor, mainly when it is a micro-rotative compressor, can be closely related to the temperature gap or the temperature variation. In consequence, the energy consumption is better controlled. At least, peaks of energy consumption can be avoided or limited. This arrangement provides the advantage that beside the global low average consumption, the temporary maximal energy consumption can also decrease, so that the batteries do not need to provide too high instantaneous power. Such a smooth temperature management thus allows to decrease the weight and/or hindrance of the batteries, and/or to decrease their cost.

The TCS **14** is connected to some integrated or remote computational means adapted to anticipate the temperature variations so that the compressor can be activated in anticipation to maintain the temperature at the right level with lower energy consumption since it avoids peaks of consumption. Such an integrated or remote computational means rely on external thermal sensors arranged on the container or at a remote location. The temperature can also be smoothly managed to anticipate a strong and fast variation. This can be the case for example at the arrival of the aircraft at a warm country, or when storing the container 1 outside, under sun, or on the contrary under very cold conditions.

Flexibility and/or reliability is thus increased without prejudice on the weight of the container 1, and/or on the weight of freight.

It is understood that the TCS **14** denotes any thermal control system, including refrigeration systems and heating systems. The container of the present disclosure is thus provided with a cooling or a heating system or both of a cooling and heating system. To this end, reduction of the global weight of the container allows to include both cooling and heating systems, increasing in consequence its performances and/or its flexibility.

The container of the present disclosure can in addition comprise one or several solar panels **30,** either integrated or combined to one or more of its walls. The solar panels **30** are preferably placed on the top surface of the container 1. When integrated to a wall, it can be integrated during the manufacturing process of the wall. Alternatively, it can be integrated to the wall during post manufacturing steps. When it is combined to a wall, the solar panel **30** can be permanently linked to the container, by any suitable means such as gluing, welding, screwing and equivalent. Alternatively, it can be removably linked to the container **1** so that it can be easily added or removed on demand, according to the freight conditions or maintenance purposes. Fast clamping means or any other fixation means may be used to this end. The solar panel **30** is electrically connected to the batteries **210** and/or to the active thermal system or parts of the active thermal system such as the Electrical Power System (EPS).

The surface of the solar panels **30** may approximately correspond to the surface of the top of the container **1.** The solar panels can for example occupy half of the top surface or 70% or 80% or more than 90% of the top of the container **1.** As an example, the surface adapted to receive one or several solar panels **30** can be of around 2 m² to 3 m² for standard small container, of the RKN type. For such a surface, the weight of the solar panels **30** is kept to around 5 to 7 kg. It is understood that the surface occupied by the solar panels, as well as their properties, can easily be adapted according to the use.

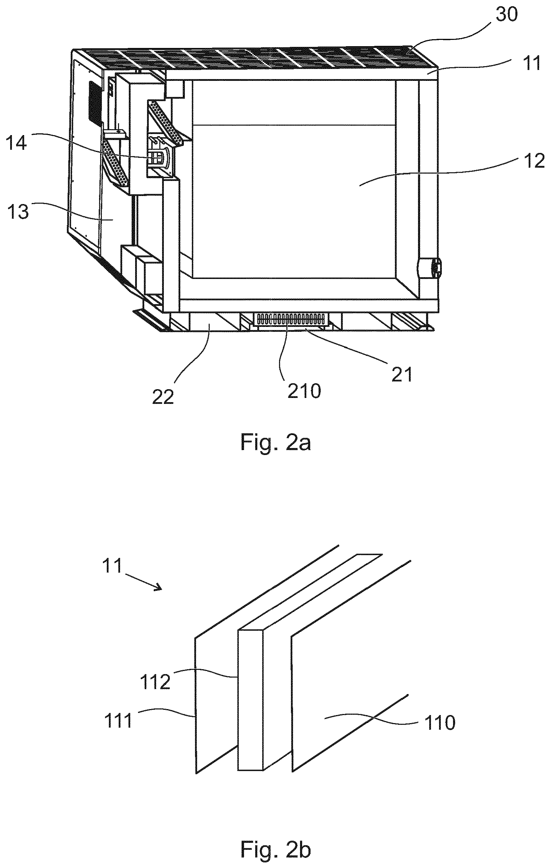

As mentioned above, the size and weight of the batteries **210,** as well as the size and weight of the TCS **14,** strongly depends on the thermal performances of the walls **11** of the container **1..** The walls **11** of the present container **1** typically comprise at least a first panel **110** and a thermally insulating material **112** combined to the first panel **110** (figure 2b). Preferably a wall **11** of the container **1** comprises a first panel **110** and a second panel **111** facing each other and an insulating material **112** arranged between the first and the second panels. Using thicker insulating material already used in the current containers, results in an increase of weight and reduces the volume available for the freight. Usual thermal insulating materials in this field have a density of around 80kg/m³ or even higher. Increasing the amount of such insulating material thus increases the global weight as well as it reduces the storage volume of the container **1.** The insulating material **112** is thus selected among materials having a density lower than 60 kg/m³, preferably lower than 50 kg/m³ or even around 30 kg/m³ or lower. A polyurethan based foam can be used as such.

Beside its density, the insulating material is selected to have a lower thermal conductivity compared to the commonly used material. The thermal conductivity of the usual insulating material is around 0,03 W/mK. The insulating material **112** of the present disclosure is preferably selected among materials having a thermal conductivity lower than 0,03 W/mK, preferably lower than 0.02 W/mK, or around 0.018 W/mK or lower.

For an improved thermal isolation, the insulating material **112** of the present disclosure has both a density lower than 60 kg/m³ and a thermal conductivity lower than 0.03 W/mK, or 0.2 W/mK.

As an example, the selected insulating material **112,** has a density of around 30 kg/m³ and thermal conductivity of 0,02 W/mK or lower, such as around 0.018 W/mK.

Although the insulating material **112** can be combined to the traditional metallic structures of the containers, it is preferably combined to a lighter material such as a polymeric or a multi-component material, such as composite material or a combination thereof. The aluminium currently used as structure for the container **1,** has a high thermal conductivity which is prejudicial to the thermal performances. In addition, it is heavy and thus represents an issue with regards to the Tara weight.

The insulating walls **11** of the container **1** preferably comprise an insulating material **112** combined to a non-metallic structural panel 110, 111. The insulating material **112** has most advantageously the density and/or the thermal conductivity above-mentioned. The non-metallic structural plate preferably comprises carbon fibre or glass fibre or composite materials or a combination thereof. This provides the advantage of a lighter structure having a lower thermal conductivity.

It is thus understood that the insulating walls **11** of the container **1** can either comprise a traditional metallic structure combined to an improved insulating material **112** having the density and the thermal conductivity described here, or comprise a traditional insulating material combined to a non-metallic structure above-mentioned.

In a preferred embodiment, the insulating walls **11** of the present container **1** has both an improved insulating material **112** as above described and a non-metallic structure.

Regarding the structure of the container **1,** it should resist to a load of several tons, according to the corresponding regulation. Where a composite material comprising fibres is used instead of a metallic structure, the same resistance should be demonstrated.

The container 1 may comprise one or more intermediate layers **201** between the base **20** and the lower part of the box.

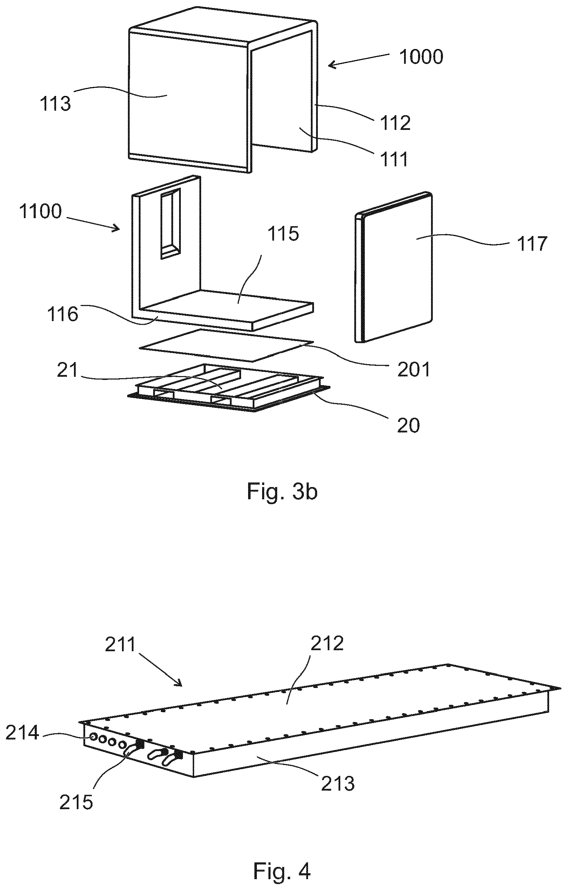

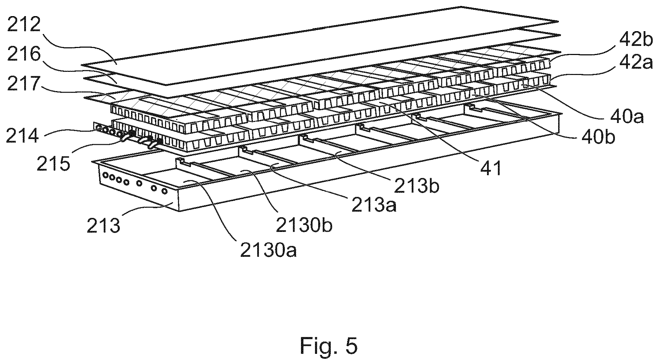

It is to be understood that the thermal insulation above described allows to reduce the dimensions and the weight of the active thermal system, including the batteries **210.** There is thus a double benefit of the disclosed container **1.** The disclosed container 1 can however comprise the insulated walls as described above, combined to a traditional TCS. The present container however preferably comprises a low consumption optimized TCS **14.** The batteries module **210** lodged in the central housing **21** are packed in a rigid tray **211** having edges **213** and a lid **212** so that they are protected against chocs and water (fig.4). The tray **211** can be in metal, in composite material or in a suitable hard polymer. The height of the edges **211** of the tray **213** is at least equal to the thickness of the batteries module 210. The tray **211** thus prevents the batteries **210** to be in contact with water, in case of rain and bad storage conditions of the container **1.** It also contains any accidental leakage from the batteries **210.** The tray **211** comprises at least one internal wall **213a, 213b** defining separate internal areas **2130a, 2130b** (fig.5). The internal walls limit the contamination from one internal area to the other one, and thus improves the safety of the batteries **210** in case of failure or water contamination.

The tray **211** comprises at least one external electrical connection means **215** to allow an easy plugging operation with the electrical devices of the container **1.** This external electrical connection is internally linked to the batteries contained in the tray **211,** either individually or through a common connection.

The tray **211** may in addition comprise one or more air permeable devices **214,** allowing exchange of air and/or humidity between the internal space of the tray **211** and the outside environment, while preventing the passage of liquids. Such device can be for example a Breather valve (GorTex valve). The tray **211,** when tightly closed with the lid **212** can thus resist to pressure variations without deformation.

The exploded view of figure 5 better shows the arrangement of the battery cells within the tray **211.** A set of several battery cells are packed together to form at least one battery module **40a, 40b.** For example, a set of 240 battery cells can form a battery module **40a, 40b.** Several battery modules **40a, 40b** are combined to form the full power pack inside the tray **211..** In a given battery module **40a, 40b,** the battery cells are placed at a horizontal position. In other words, their larger dimension is oriented according to a horizontal direction. Such an arrangement allows to minimize the thickness of the power pack and save storage space in the payload compartment of the container **1.** Several battery modules **40a, 40b** can be aligned in the tray **211** in a way that each internal areas **2130a, 2130b** receives a battery module **40a, 40b.** Each battery module is arranged within a fixation box **42.** Such a fixation box can have for example, a lower part **42a,** permanently fixed to the tray **211,** and a cover part **42b** that can be removably fixed to the lower part **42a** so as to maintain the corresponding battery module. The material of the fixation boxes is preferably non electrostatic and electrically insulated.

The tray **211** may comprise one or several sealing elements **217** and additional protection elements **216.** Such a protection element may be a compression foam.

The modular arrangement of the battery modules **40a, 40b** allows to conveniently adapt the autonomy and/or the weight of the container 1. Since the batteries are placed at a central position, one or several battery modules **40a, 40b** can be removed without providing a significant unsymmetrical weight load. No counterweight is necessary.

Depending on the anticipated energy consumption, the number of battery modules **40a, 40b** can easily be adapted.

The battery cells are preferably selected among the Nickel-metal hydride (NiMH) cell type. They are rechargeable.

The solar panels are electrically connected to the Electrical Power System (EPS) **15** of the corresponding container 1. A container according to the present disclosure may in addition comprise an electrical connection means accessible from outside the container and allowing to connect two containers **1,** or to connect a container to a supply source. Several containers 1 can thus be interconnected and/or branched on the power supply of the local infrastructure of an airport. The combined solar panels thus allows to better distribute the energy to several containers 1.

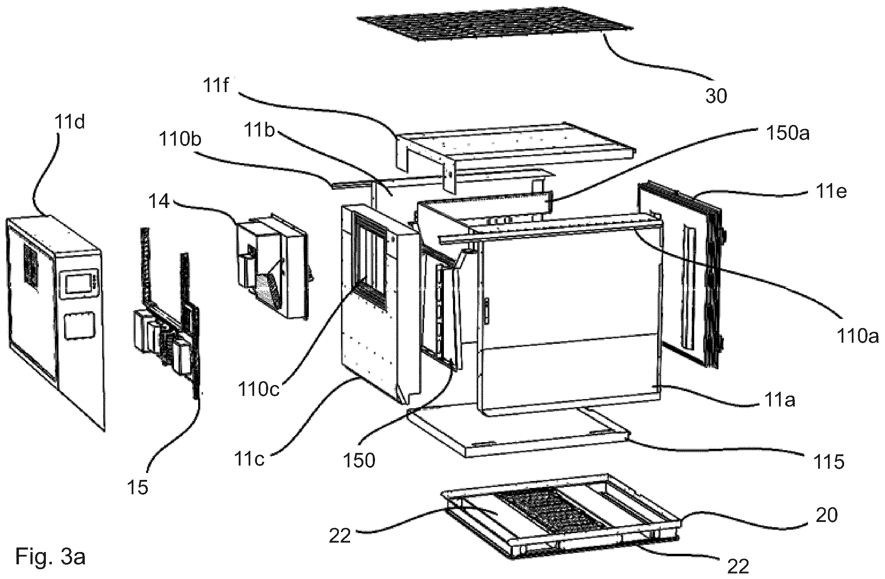

An embodiment of the present disclosure is better shown in figure 3a. The container according to such arrangement comprises a first **11a** and a second **11b** lateral walls, which are thermally insulated, as above described. The container also comprises a top wall **11f,** defining the roof, and a third lateral wall **11e,** comprising an openable part to access the storage volume **12.** The top wall **11f** as well as the other walls of the container are made of composite material or comprise composite material. All the top wall and the lateral walls **11a, 11b, 11d** comprise the insulating material above mentioned sandwiched between two non-metallic panels. The container **1** may comprise one or several internal walls **11c,** providing distinct compartments inside the container **1.** For example, an internal wall **11c** may be provided as the fourth lateral wall, which closes the storage volume **12,** together with the first **11a,** the second **11b** and the third **11e** lateral walls. Some profiles **110a, 110b** are advantageously provided at the top edge of the lateral walls. Such profiles may be made of polymer and glued on the walls. The internal wall **11c** preferably comprises the insulating material **112** above mentioned, sandwiched between two panels **110, 111.** The internal wall **1c** separates the storage volume **12** from a technical volume **13,** comprising at least some of the technical devices used for actively controlling the temperature inside the container **1.** The technical volume **13** comprises a Temperature Control System (TCS) **14** and an Electrical Power System (EPS) **15,** adapted to manage the energy from various sources, such as battery or solar panels. The technical volume **13** comprises the necessary compressor, evaporator, condenser and the corresponding pipes and fans. The technical volume **13** may also be used to lodge one or several extra battery modules. The internal wall **11c** is provided with one or more openings **110c** allowing a controlled communication between the storage volume **12** and the technical volume **13.** Such opening **110c** may be grids, potentially comprising filters and allowing air flows. Alternatively, the opening **110c** may be holes adapted for the passage of pipes. The technical volume may be closed by an external wall **11d.** Such an external wall **11d** can be a cover. The wall **11d** may also be known as an equipment bay.

The container **1** comprises air distribution ducts **150, 150a,** allowing to actively modulate the thermal conditions inside the storage volume **12.** The air distribution ducts **150, 150a,** are in flow communication with the technical volume **13** through the internal wall **11c.**

According to another embodiment better shown in figure 3b, the container **1** comprises a U-chape structure **1000** defining the top and two opposite lateral walls **11.** The U-shape structure **1000** is a one bloc piece having an external layer **113** and an insulating material **112** associated to the external layer **113.** It can in addition have an internal layer **111,** being of same or different material than the external layer **113.** The external layer **113** comprises fibres, either carbon or glass fibres, they are organized to avoid any disruption between the lateral walls and the top surface of the U-chape element **1000.** The fibres within the non-metallic material are oriented according to a privilege direction crossing the angles between the lateral walls and the top surface.

The container 1 has also a L-chape structure **1100,** adapted to be combined to the U-Chape structure **1000.** It is a one bloc piece forming the lower part of the box and a third lateral wall. The L-chape structure **1100** also comprises an insulating material **112,** above described..

One or both of the U-chape **1000** and the L-chape 1100 elements may comprise in addition local reinforcing structural elements such as transversal beams.

The present invention further encompasses a process for manufacturing a container **1.** At least it relates to a process for manufacturing the insulating walls.

The present process comprises a step of moulding structural plates or panels based on fibre-containing material such as a glass fibre material. Usual moulding conditions can be applied depending on the material and the needs. The fibres are oriented along a privilege direction. The structural panels correspond to the layers used in the rigid part of the walls 11 and surrounding the insulating material 112. Panel may be flat and have an homogenous thickness. The moulding step allows however different tridimensionality shapes of the panels. For example, the U-shape and L-shape structures can be provided according to the present process.

For example, the thickness of a plate may vary locally and precisely in order to create local reinforcements. This allows to have an optimized structure in terms of resistance vs weight. In case an angle is formed, the fibres of the final structure may be oriented in an orthogonal direction, compared to the direction of the ridge resulting from the angular position of the panels.

The manufacturing process comprises a combination step of combining the plates or panel above-mentioned with an insulating material.

The combination step includes contacting a panel and the insulating material **112** under a predetermined pressure at a predetermined temperature. The predetermined pressure may be comprised between 0.5 bars and around 2 bars. It can be for example around 1 bar. The pressure applied to the plates from outside, may be combined to, or followed with a vacuum applied to the internal structure Such a vacuum may be for example comprised between around -0.1 bar and -0.8 bar, for example around -0.2 or -0,3 bars. A curing temperature is applied during part or all of the pressure application and/or vacuum application. The curing temperature is adapted according to the nature of the handled materials. As an example, a temperature comprised between 90°C and 150°C, preferably between 100° and 120°C, may be applied. The curing temperature may be constant and corresponding to a predetermined value. Alternatively, the curing temperature may have a profile moving from several values over time. The insulating material is preferably presented as a bloc of material having a parallelepipedal shape. The insulating material has preferably the density and/or the thermal conductivity described above. The insulating material 112 is as above defined. It is preferably based on polyurethan foam. It can be for example a PIR, or a PIR premium based product, such as PIR Premium Plus. The pressure and thermal conditions are adapted to avoid any degradation of the insulating material, and in particular to guarantee that the integrity of the insulating material remains stable during the process and over time. Delamination of the insulating material is more particularly avoided.

During the combination step, the insulating material may be combined to only one panel, corresponding for example to the external walls of the container. Alternatively, the insulating material may be combined to two panels so as to be arranged in sandwich between these two panels. Such a sandwich arrangement may be performed in a single step or in two successive steps under same or different conditions. The insulating material is combined to the non-metallic fibre containing material under the manufacturing conditions. It is in particular not necessary to add any additional adhesive material. The pressure conditions and the temperature conditions are adapted to provide a good and reliable adhesion of the insulating material to the non-metallic fibre containing plates.
The container here described denotes any thermo Controlled Container commonly used with aircrafts. They include different size and type of container, such as the RKN type, the RAP type container and any other recognized type.

### reference symbols in the figures

- 1: Container
- 10: Storage box
- 11: Walls
- 1000: U-Shape structure
- 1100: L-Shape structure
- 112: Insulating material
- 12: Internal storage volume
- 13: Technical volume
- 14: Temperature Control System
- 20: Base
- 21: Central housing
- 210: Batterie modules
- 211: Tray
- 212: Lid
- 213: Edges
- 213a, 213b: Internal walls
- 2130a, 2130b: Internal areas
- 214: Permeable devices
- 215: Connection means
- 216: Protection elements
- 217: Sealing elements
- 22: Forklift tunnels
- 30: Solar panels
- 40a, 40b: Battery Modules
- 42: Fixation box
- 42a: Lower part
- 42b: Cover part

## Claims

1. A temperature regulated container (1) adapted for aerial shipment of sensitive products comprising :
- a storage box (10) comprising walls (11) defining an internal storage volume (12), corresponding to a payload compartment dedicated to a freight, said walls comprising an insulating material (112) providing a thermal isolation and a structural arrangement, the storage box being arranged on a base (20) comprising at least two forklift tunnels (22) and a central housing (21) between two forklift tunnels,
- one or more temperature control system (14) integrated to the container comprising at least one compressor, and an Electrical Power System (15) comprising battery cells feeding the temperature control system (14), wherein said battery cells are lodged in said central housing (21),
- **characterized in that** said temperature control system (14) comprises computational means adapted to anticipate temperature variations, so that the compressor can be activated, or its rotation speed can be adjusted, in anticipation to maintain the temperature at the right level while avoiding peaks of consumption based on integrated or remote external thermal sensors.

2. Container of claim 1, further comprising one or several solar panels (30) being removable or not.

3. Container according to claims 1 or 2, further comprising an electrical connection means accessible from outside the container and allowing to connect two containers or to connect a container to a supply source.

4. Container according to claims 3, said temperature control system (14) and said Electrical power system (15) being adapted to manage the energy from various sources, including the one or more solar panels (30) of claim 2, said battery cells of claim 1 and said electrical connection means of claim 3.

5. Container according to one of claims 1 to 4, wherein the density of the insulating material is lower than 60 kg/m³, preferably lower than 50 kg/m³, around 30 kg/m³ or lower.

6. Container according to one of claims 1 to 5, wherein said structural arrangement comprises panels of non-metallic fibre containing material, wherein said thermally insulating material (112) is arranged between two of said panels of non-metallic fibre containing material, wherein the insulating material has a density of around 30 kg/m³ and thermal conductivity of around 0,02 W/mK, 0.018 W/mK or lower and wherein the thermal conductivity of the insulating material is lower than 0,03 W/mK, preferably lower than 0.02 W/mK, around 0,018 W/mK or lower.

7. Container according to one of claims 1 to 4, wherein said batteries cells are packed in a tray (211) arranged in the central housing (21), the tray having edges (213) and a lid (212), wherein the height of the edges is equal or larger than the thickness of the batteries cells.

8. Container according to claim 5, wherein the tray (211) further comprises at least one internal wall (213a, 213b) defining internal areas (2130a, 2130b).

9. Container according to one of claims 1 to 6, wherein said batteries cells are packed as 6 battery modules (40a, 40b) to form a power pack.

10. Container according to claim 7, wherein each battery module (40a, 40b) is arranged in a corresponding internal area (2130a, 2130b) of the tray (211).

11. Container according to one of claims 5 to 8, wherein said tray (211) further comprises an external electrical connection means (215) internally linked to the batteries (210).

12. Container according to one of claims 5 to 9, wherein said tray (211) further comprises one or more air permeable devices (214) such as a breather valve, allowing exchange of air and/or humidity between the internal space of the tray (211) and the outside environment, while preventing the passage of liquids.

13. Container according to one of claims 1 to 10, wherein said battery cells are of NiMH type and arranged so that their larger dimension is oriented in an horizontal plan.

14. Container according to one of claims 1 to 17, wherein said at least one compressor is a micro-rotative compressor.

15. Container according to one of claims 1 to 14, wherein said one or more temperature control system (14) comprises a refrigerating system and a heating system.

## Patentansprüche

1. Ein temperaturgeregelter Behälter (1), der für den Lufttransport empfindlicher Produkte geeignet ist, umfassend:
- eine Aufbewahrungsbox (10) mit Wänden (11), die ein inneres Aufbewahrungsvolumen (12) definieren, das einem für eine Fracht bestimmten Laderaum entspricht, wobei die Wände ein Isoliermaterial (112) aufweisen, das eine thermische Isolierung und eine strukturelle Anordnung gewährleistet, wobei der Aufbewahrungsbox auf einer Basis (20) angeordnet ist, die mindestens zwei Gabelstaplertunnel (22) und eine zentrale Aufnahme (21) zwischen zwei Gabelstaplertunneln aufweist,
- ein oder mehrere in den Behälter integrierte Temperaturkontrollsysteme (14), die mindestens einen Kompressor umfassen, und ein elektrisches Stromversorgungssystem (15), das Batteriezellen umfasst, die das Temperaturkontrollsystem (14) speisen, wobei die Batteriezellen in dem zentralen Gehäuse (21) untergebracht sind,
**dadurch gekennzeichnet, dass** das Temperaturkontrollsystem (14) Rechenmittel umfasst, die geeignet sind, Temperaturschwankungen zu antizipieren, so dass der Kompressor aktiviert oder seine Rotationsgeschwindigkeit angepasst werden kann, um die Temperatur auf dem richtigen Niveau zu halten und gleichzeitig Verbrauchsspitzen auf der Grundlage integrierter oder entfernter externer Wärmesensoren zu vermeiden.

2. Der Behälter nach Anspruch 1, weiters umfassend eine oder mehrere abnehmbare oder nicht abnehmbare Solarzellen (30).

3. Der Behälter nach Anspruch 1 oder 2, weiters umfassend ein elektrisches Anschlussmittel, das von außerhalb des Behälters zugänglich ist und es ermöglicht, zwei Behälter zu verbinden oder einen Behälter an eine Versorgungsquelle anzuschließen.

4. Der Behälter nach Anspruch 3, wobei das Temperaturkontrollsystem (14) und das elektrische Stromversorgungssystem (15) geeignet sind, Energie von verschiedenen Quellen zu verwalten, einschließlich von einen oder mehreren Solarzellen (30) nach Anspruch 2, der Batteriezellen nach Anspruch 1 und der elektrischen Anschlussmittel nach Anspruch 3.

5. Der Behälter nach einem der Ansprüche 1 bis 4, wobei die Dichte des Isoliermaterials geringer als 60 kg/m³, vorzugsweise geringer als 50 kg/m³, oder etwa 30 kg/m³ oder geringer ist.

6. Der Behälter nach einem der Ansprüche 1 bis 5, wobei die strukturelle Anordnung Platten aus nicht-metallfaserhaltigem Material umfasst, wobei das wärmeisolierende Material (112) zwischen zwei der Platten aus nicht-metallfaserhaltigem Material angeordnet ist, wobei das Isoliermaterial eine Dichte von etwa 30 kg/m³ und eine Wärmeleitfähigkeit von etwa 0,02 W/mK, 0,018 W/mK oder weniger aufweist und wobei die Wärmeleitfähigkeit des Isoliermaterials niedriger als 0,03 W/mK, vorzugsweise niedriger als 0,02 W/mK, etwa 0,018 W/mK oder niedriger ist.

7. Der Behälter nach einem der Ansprüche 1 bis 4, wobei die Batteriezellen in einem Träger (211) verpackt sind, der in dem zentralen Gehäuse (21) angeordnet ist, wobei der Träger Ränder (213) und einen Deckel (212) aufweist, wobei die Höhe der Ränder gleich oder größer als die Dicke der Batteriezellen ist.

8. Der Behälter nach Anspruch 5, wobei der Träger (211) ferner mindestens eine Innenwand (213a, 213b) aufweist, die Innenbereiche (2130a, 2130b) definiert.

9. Der Behälter nach einem der Ansprüche 1 bis 6, wobei die Batteriezellen als 6 Batteriemodule (40a, 40b) gepackt sind, um ein Akkupack zu bilden.

10. Der Behälter nach Anspruch 7, wobei jedes Batteriemodul (40a, 40b) in einem entsprechenden Innenbereich (2130a, 2130b) des Trägers (211) angeordnet ist.

11. Der Behälter nach einem der Ansprüche 5 bis 8, wobei der Träger (211) ferner ein externes elektrisches Verbindungsmittel (215) umfasst, das intern mit den Batterien (210) verbunden ist.

12. Der Behälter nach einem der Ansprüche 5 bis 9, wobei der Träger (211) ferner eine oder mehrere luftdurchlässige Vorrichtungen (214), wie z.B. ein Entlüftungsventil, umfasst, die den Austausch von Luft und/oder Feuchtigkeit zwischen dem Innenraum des Trägers (211) und der äußeren Umgebung ermöglichen, während sie den Durchgang von Flüssigkeiten verhindern.

13. Der Behälter nach einem der Ansprüche 1 bis 10, wobei die Batteriezellen vom Typ NiMH sind und so angeordnet sind, dass ihre größere Abmessung in einer horizontalen Ebene ausgerichtet ist.

14. Der Behälter nach einem der Ansprüche 1 bis 17, wobei der mindestens eine Kompressor ein Mikrorotationskompressor ist.

15. Der Behälter nach einem der Ansprüche 1 bis 14, wobei das eine oder mehrere Temperaturkontrollsystem (14) ein Kühlsystem und ein Heizsystem umfasst.

## Revendications

1. Conteneur à température régulée (1) adapté au transport aérien de produits sensibles, comprenant :
- un coffre de stockage (10) comprenant des parois (11) définissant un volume de stockage interne (12), correspondant à un compartiment de charge utile dédié à un fret, lesdites parois comprenant un matériau isolant (112) assurant une isolation thermique et un agencement structurel, le coffre de stockage étant disposé sur une base (20) comprenant au moins deux tunnels pour chariot élévateur (22) et un logement central (21) entre deux tunnels pour chariot élévateur,
- un ou plusieurs systèmes de contrôle de la température (14) intégrés au conteneur comprenant au moins un compresseur, et un système d'alimentation électrique (15) comprenant des cellules de batterie alimentant le système de contrôle de la température (14), lesdites cellules de batterie étant logées dans ledit logement central (21),
- **caractérisé en ce que** ledit système de contrôle de température (14) comprend des moyens de calcul adaptés pour anticiper les variations de température, de sorte que le compresseur puisse être activé, ou que sa vitesse de rotation puisse être ajustée, en anticipation afin de maintenir la température au bon niveau tout en évitant les pics de consommation sur la base de capteurs thermiques externes intégrés ou à distance.

2. Conteneur selon la revendication 1, comprenant en outre un ou plusieurs panneaux solaires (30) amovibles ou non.

3. Conteneur selon les revendications 1 ou 2, comprenant en outre un moyen de connexion électrique accessible depuis l'extérieur du conteneur et permettant de connecter deux conteneurs ou de connecter un conteneur à une source d'alimentation.

4. Conteneur selon la revendication 3, ledit système de contrôle de température (14) et ledit système d'alimentation électrique (15) étant adaptés pour gérer l'énergie provenant de diverses sources, y compris le ou les panneaux solaires (30) de la revendication 2, lesdites cellules de batterie de la revendication 1 et ledit moyen de connexion électrique de la revendication 3.

5. Conteneur selon l'une des revendications 1 à 4, dans lequel la densité du matériau isolant est inférieure à 60 kg/m³, de préférence inférieure à 50 kg/m³, environ 30 kg/m³ ou moins.

6. Conteneur selon l'une des revendications 1 à 5, dans lequel ledit agencement structurel comprend des panneaux de matériau contenant des fibres non métalliques, dans lequel ledit matériau thermiquement isolant (112) est disposé entre deux desdits panneaux de matériau contenant des fibres non métalliques, dans lequel le matériau isolant a une densité d'environ 30 kg/m³ et une conductivité thermique d'environ 0,02 W/mK, 0,018 W/mK ou moins, et dans lequel la conductivité thermique du matériau isolant est inférieure à 0,03 W/mK, de préférence inférieure à 0,02 W/mK, environ 0,018 W/mK ou moins.

7. Conteneur selon l'une des revendications 1 à 4, dans lequel lesdites cellules de batterie sont empaquetées dans un plateau (211) disposé dans le boîtier central (21), le plateau ayant des bords (213) et un couvercle (212), dans lequel la hauteur des bords est égale ou supérieure à l'épaisseur des cellules de batterie.

8. Conteneur selon la revendication 5, dans lequel le plateau (211) comprend en outre au moins une paroi interne (213a, 213b) définissant des zones internes (2130a, 2130b).

9. Conteneur selon l'une des revendications 1 à 6, dans lequel lesdites cellules de batterie sont empaquetées sous la forme de 6 modules de batterie (40a, 40b) pour former un bloc d'alimentation.

10. Conteneur selon la revendication 7, dans lequel chaque module de batterie (40a, 40b) est disposé dans une zone interne correspondante (2130a, 2130b) du plateau (211).

11. Conteneur selon l'une des revendications 5 à 8, dans lequel ledit plateau (211) comprend en outre un moyen de connexion électrique externe (215) relié en interne aux batteries (210).

12. Conteneur selon l'une des revendications 5 à 9, dans lequel ledit plateau (211) comprend en outre un ou plusieurs dispositifs perméables à l'air (214), tels qu'une valve de respiration, permettant l'échange d'air et/ou d'humidité entre l'espace interne du plateau (211) et l'environnement extérieur, tout en empêchant le passage de liquides.

13. Conteneur selon l'une des revendications 1 à 10, dans lequel lesdites piles sont de type NiMH et disposées de telle sorte que leur plus grande dimension soit orientée dans un plan horizontal.

14. Conteneur selon l'une des revendications 1 à 17, dans lequel ledit au moins un compresseur est un micro-compresseur rotatif.

15. Conteneur selon l'une des revendications 1 à 14, dans lequel ledit ou lesdits systèmes de contrôle de température (14) comprennent un système de réfrigération et un système de chauffage.
